# EUROPÄISCHE PATENTSCHRIFT

(11) **EP 1 033 528 B1**
(45) Veröffentlichungstag und Bekanntmachung des Hinweises auf die Patenterteilung: **13.10.2004**
(21) Anmeldenummer: 00104240.7
(22) Anmeldetag: 02.03.2000
(51) Int. Cl.: F21S 8/12, F21V 14/08

(54) **Scheinwerfer für Fahrzeuge**
Vehicle headlamp
Projecteur pour véhicule

(30) Priorität: 04.03.1999 DE 19909413
(43) Veröffentlichungstag der Anmeldung: 06.09.2000
(73) Patentinhaber: Hella KG Hueck & Co., 59552 Lippstadt (DE)
(72) Erfinder: Brummel, Reinhold, 59609 Anröchte (DE); Eichhorn, Karsten, Dr., 59320 Ennigerloh (DE); Kalze, Franz-Josef, 33428 Harsewinkel (DE); Priesnitz, Gerhard, 59609 Anröchte (DE); Schmidt, Christian, 59955 Winterberg (DE); Topp, Ewald, 59609 Anröchte (DE); Witt, Ulrich, 59557 Lippstadt (DE)

(56) Entgegenhaltungen:
- EP-A- 0 900 972
- DE-A- 3 415 867
- DE-A- 4 318 315
- DE-A- 4 335 286

## Beschreibung

Die Erfindung betrifft einen Scheinwerfer für Fahrzeuge nach den Merkmalen des Oberbegriffs des Anspruchs 1.

Ein solcher Scheinwerfer für Fahrzeuge ist aus der DE 43 35 286 A1 bekannt und weist ein Lichtsystem auf, welches im wesentlichen aus einem ellipsoidförmigen Reflektor einer im inneren Brennort des Reflektors angeordneten Lichtquelle, einer das Licht sammelnden Linse und einer zwischen Reflektor und Linse angeordneten drehbaren Blendenwelle besteht. Als Lichtquelle kann eine Gasentladungslampe dienen. Die drehbare Blendenwelle ist mindestens mit einem Elektromotor gekoppelt. Die Drehachse der Blendenwelle verläuft horizontal und quer zur optischen Achse des Lichtsystems und ist exzentrisch zur zylindrischen Mantelfläche der Blendenwelle angeordnet. Die zylindrischen Mantelflächenabschnitte der Blendenwelle sind so versetzt zueinander angeordnet, daß die Blendenwelle eine umlaufende Stufe aufweist. Durch den Elektromotor ist die Blendenwelle in mehrere Drehstellungen drehbar. In jeder Drehstellung bildet die Mantelfläche in ihrem oberen Bereich eine Brennlinie, welche eine Hell-Dunkel-Grenze einer Lichtfigur erzeugt. Wegen der exzentrisch angeordneten Drehachse verlaufen in jeder Drehstellung der Blendenwelle die Brennlinien auf unterschiedlichem Höhenniveau. Somit ist in mehreren Drehstellungen der Blende ein asymmetrisches Abblendlicht gegeben, welches mehr oder weniger weit reicht. Ein sehr weit reichendes Abblendlicht ist vorteilhaft für eine Autobahnfahrt und ein weniger weit reichendes Licht für eine Stadtfahrt. Ein solcher Scheinwerfer ist entweder nur für Rechts- oder Linksverkehr ausgelegt.

Aus der DE 34 15 867 A1 ist ein Scheinwerfer für Fahrzeuge bekannt geworden, bei dem zwischen einem ellipsoidförmigen Reflektor und einer Linse eine plattenförmige Blende angeordnet ist, welche um eine quer zur optischen Achse und horizontal verlaufende Drehachse verschwenkbar ist. Die Blende weist an den sich abgewandten Kanten jeweils eine Brennlinie auf. Beide Brennlinien dienen zur Erzeugung eines asymmetrischen Abblendlichtes, wobei die eine Brennlinie für Rechts- und die andere für Linksverkehr dient.

Aufgabe der Erfindung ist es, den im Oberbegriff des Anspruchs 1 beschriebenen Scheinwerfer für Fahrzeuge derart zu gestalten, daß durch die Blendenwelle mehrere Lichtfiguren für Rechts- und Linksverkehr erzeugbar sind und bei einem Schalten zwischen den Lichtfiguren diese möglichst kontinuierlich ineinander übergehen. Diese Aufgabe wird nach der Erfindung durch die Merkmale des kennzeichnenden Teils des Anspruchs 1 gelost. Dadurch ist der Scheinwerfer sowohl für Rechts- und Linksverkehr einsetzbar und kann für Rechts- und Linksverkehr dieselben Lichtfiguren aufweisen. Beim Schalten zwischen den einzelnen Lichtfiguren in einer Gruppe entsteht keine sprunghafte Veränderung der Lichtfigur, da die äußeren Brennlinien der Gruppen d.h. die die jeweilige Gruppe von Brennlinieneinfassenden Brennlinien die größte und kleinste Lichtfigur der jeweiligen Gruppe erzeugen.

Beim Schalten zwischen den einzelnen Lichtfiguren in einer Gruppe ist eine sprunghafte Veränderung der Lichtfiguren besonders klein, wenn beide Gruppen ausschließlich Brennlinien aufweisen, die asymmetrische Lichtfiguren erzeugen. Die Brennlinien der ersten und zweiten Gruppe sind nach einem Umschalten von einer Gruppe zur anderen durch eine einfach ausgeführte Steuerungseinrichtung in ihre aktive Position verstellbar, wenn die Brennlinien der ersten Gruppe jeweils mit einer Brennlinie der zweiten Gruppe in einer Ebene verlaufen, in der die Drehachse der Blendenwelle liegt, wobei sämtliche Ebenen in einem gleich großen spitzen Winkel zueinander verlaufen. Dadurch ist der Verstellwinkel von den sich benachbarten Brennlinien immer gleich groß.

Die Außenabmessungen der Blendenwelle sind klein und somit auch deren Masse, wenn zwischen den äußeren Brennlinien jeder Gruppe eine Brennlinie angeordnet ist, die zusammen auf einer Ebene liegen und spiegelbildlich verlaufen, wobei die sich benachbarten äußeren Brennlinien für dieselbe Lichtfunktion dienen und die eine für Rechtsverkehr und die andere für Linksverkehr ausgelegt ist. In diesem Zusammenhang ist es vorteilhaft, wenn die Mantelfläche der Blendenwelle mindestens in einem zwei Brennlinien verbindenden Flächenabschnitt sowohl in Richtung der Drehachse als auch in Umfangsrichtung gegenüber einer Zylinderfläche abweichend und unregelmäßig verläuft. Dadurch können die Brennlinien konkav, konvex, schräg oder beliebig gekrümmt verlaufen. Weiterhin kann die Blendenwelle so ausgelegt sein, daß die Drehachse durch den Massenschwerpunkt oder nahe dem Massenschwerpunkt der Blendenwelle verläuft und somit für die Blendenwelle keine Ausgleichsgewichte notwendig sind. Der Abstand der meisten Brennlinien zu der Drehachse kann wesentlich kleiner ausgeführt sein als bei einer bekannten Blendenwelle mit zylindrischen Mantelflächenabschnitten. Somit ist die Masse der Blendenwelle kleiner als bei einer bekannten zylindrischen Blendenwelle. Bei einer Blendenwelle mit einer geringen Masse kann auch ein mit der Blendenwelle gekoppelter Elektromotor entsprechend klein dimensioniert sein.

Weiterhin ist es vorteilhaft, wenn eine Steuerungseinrichtung mit der Blendenwelle verbunden ist, durch die die Blendenwelle zwischen der ersten und zweiten Gruppe schaltbar ist. Dazu kann die Steuerungseinrichtung einen im Motorraum befindlichen Schalter aufweisen und darüber hinaus zur Verstellung der Blendenwelle in ihre Drehstellungen innerhalb der beiden Gruppen dienen.

Bei einer besonders vorteilhaften Weiterbildung der Erfindung ist die Blendenwelle mit einem Elektromotor gekoppelt, wobei eine mit dem Elektromotor gekoppelte Lagerückmeldeeinrichtung als Referenz für die Einstellposition der Blendenwelle durch den Elektromotor dient und als Lagerückmeldeeinrichtung ein Potentiometer, ein Sensor oder ein Anschlag dient. Als Elektromotor ist ein Schrittmotor mit Synchronisation über einen Anschlag, ein Schrittmotor mit Lagerückmeldung über ein Potentiometer oder ein Gleichstrommotor mit Lagerückmeldung möglich.

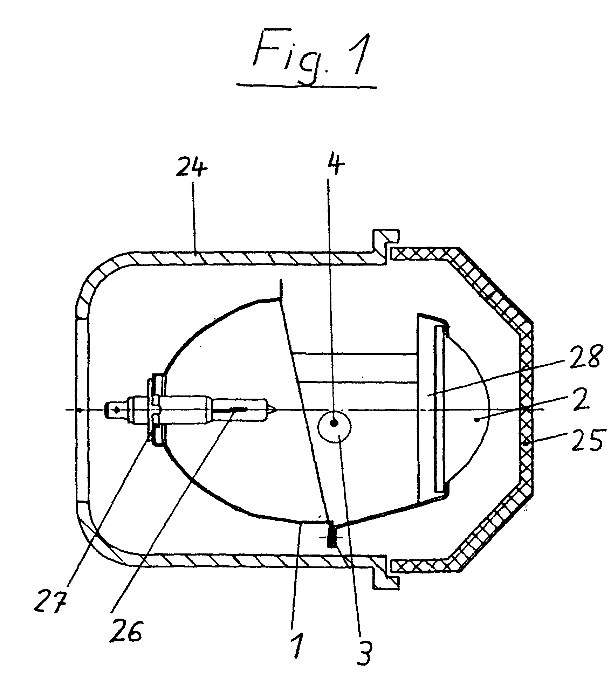

Ein Ausführungsbeispiel nach der Erfindung ist in der Zeichnung dargestellt, und zwar zeigen
Figur 1 einen vertikalen mittleren Schnitt durch einen Scheinwerfer für Fahrzeuge mit einer Blendenwelle, welche zwischen einem Reflektor und einer Linse angeordnet ist;

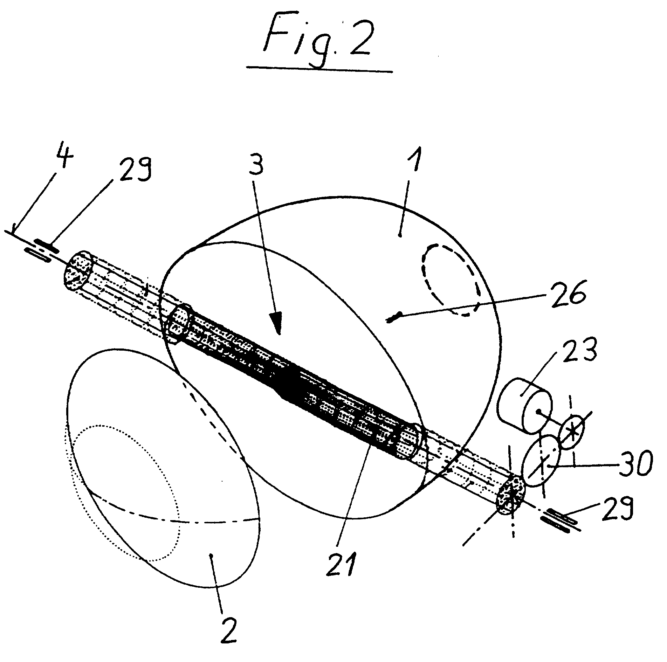

Figur 2 in einer perspektivischen Prinzipdarstellung den Scheinwerfer in Figur 1;

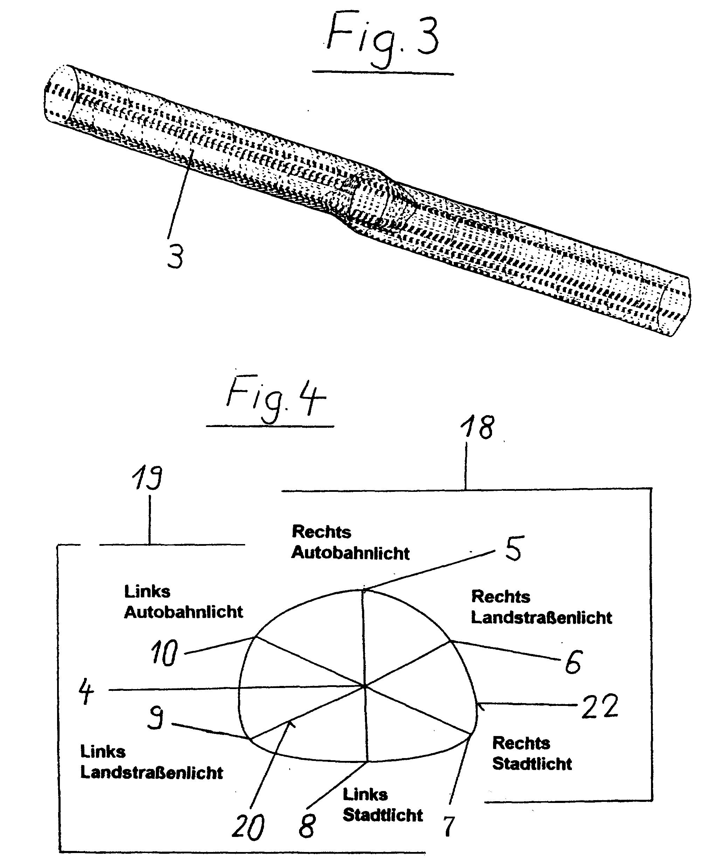

Figur 3 in einer perspektivischen Ansicht die Blendenwelle des Scheinwerfers in Figur 1;

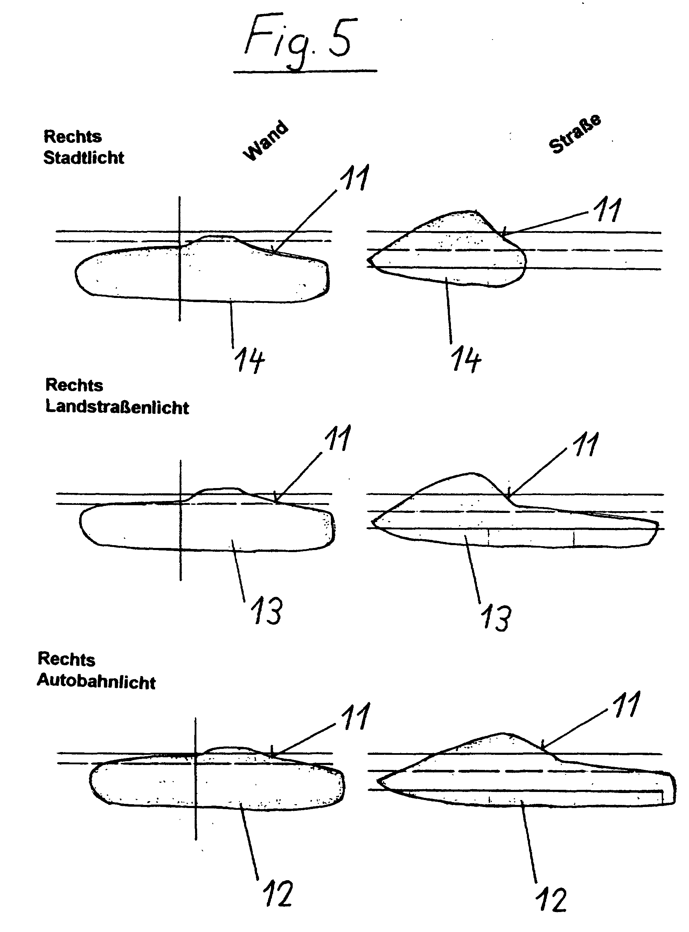

Figur 4 eine Querschnittsfläche der Blendenwelle in Figur 3;
Figur 5 mehrere Lichtfiguren auf einer vor dem Scheinwerfer aufgestellten Wand und auf der Straße für Rechtsverkehr und

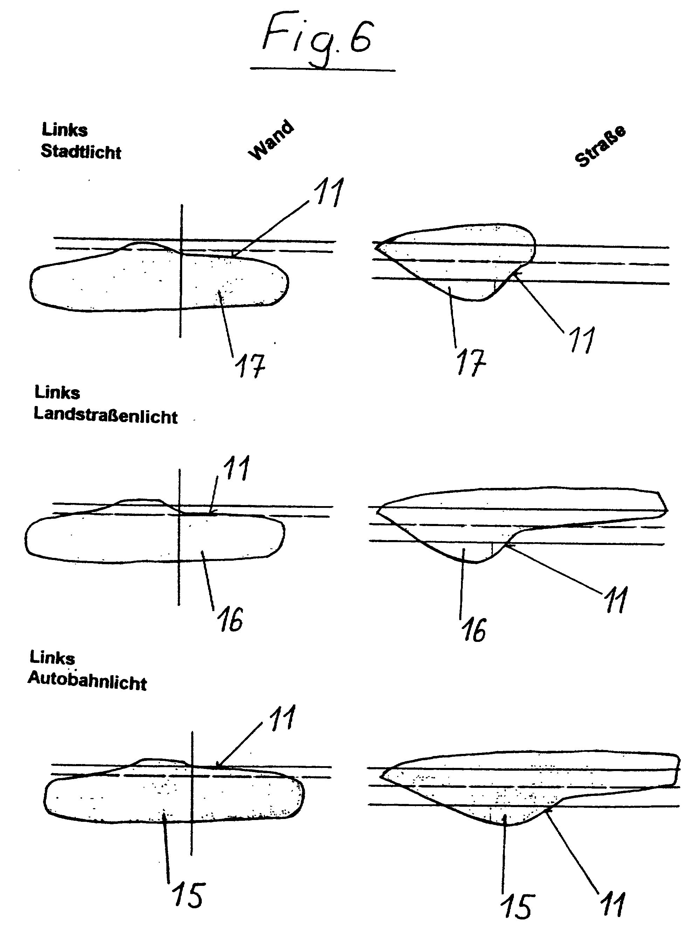

Figur 6 mehrere Lichtfiguren auf einer Wand vor dem Scheinwerfer und auf der Straße für Linksverkehr.

Der Scheinwerfer für Fahrzeuge weist ein aus Kunststoff bestehendes topfförmiges Gehäuse (24) auf, dessen vordere geöffnete Seite durch eine schalenförmige, lichtdurchlässige Abschlußscheibe (25) abgedeckt ist. Im Inneren des Gehäuses (24) ist eine Lichteinheit angeordnet, welche um zwei senkrecht zueinander stehende Achsen verstellbar ist (nicht dargestellt). Die Lichteinheit besteht im wesentlichen aus einem ellipsoidförmigen Reflektor (1), einer Lichtquelle (26), einer das Licht des Reflektors sammelnden Linse (2) und einer Blendenwelle (3). Die Lichtquelle (26) ist von einer Wendel einer Lampe gebildet und ist im inneren Brennort des ellipsoidförmigen Reflektors (1) angeordnet. Der Reflektor (1) weist in seinem Scheitelbereich eine Öffnung (27) zur Aufnahme der Lampe auf. Die Linse (2) ist von einem tischartigen Gestell (28) getragen, dessen Beine mit dem vorderen Rand des Reflektors (1) verbunden sind. Die Blendenwelle (3) ist zwischen dem Reflektor (1) und der Linse (2) angeordnet und ist um eine Drehachse (4) verschwenkbar, welche quer zur optischen Achse des Reflektors (1) und horizontal verläuft. Die Blendenwelle (3) ist mit ihren freien Endabschnitten an Lagerstellen , (29) des Scheinwerfers gehalten. Ein Endabschnitt der Blendenwelle (3) ist über ein Getriebe (30) mit einem Elektromotor (23) gekoppelt.

Die Blendenwelle (3) weist eine erste und zweite Gruppe (18, 19) von Brennlinien (5, 6, 7 und 8, 9, 10) auf. Die Gruppen (18, 19) liegen auf sich abgewandten Seiten der Blendenwelle (3). Die Gruppe (18) weist drei Brennlinien (5, 6, 7) für Rechtsverkehr und die Gruppe (19) Brennlinien (8, 9, 10) für Linksverkehr auf. Die erste und die zechste Brenntinie (5, 10) erzeugen die Hell-Dunkel-Grenze einer ersten bzw. vierten Lichtfigur (12, 15), welche sehr weit reichen und als Autobahnlicht dienen. Die dritte und vierte Brennlinie (7, 8) erzeugen eine Hell-Dunkel-Grenze (11) einer dritten und sechsten Lichtfigur (14, 17), welche nur den nahen Bereich vor dem Fahrzeug ausleuchten und als Stadtlicht dienen. Die zweite und fünfte Brennlinie (6, 9) erzeugen eine Hell-Dunkel-Grenze einer asymmetrischen Lichtfigur (13 und 16), welche für normales Abblendlicht dient. Die Brennlinien (5, 8 und 6, 9 und 7, 10) liegen jeweils auf einer Ebene (20), in welcher die Drehachse (4) verläuft. Die Ebenen (20) stehen zueinander jeweils in einem gleicht großen spitzen Winkel (a). Die Brennlinien (5, 10) für Autobahnlicht und die Brennlinien (7, 8) für Stadtlicht liegen benachbart zueinander, während die Brennlinien (6, 9) für normales asymmetrisches Abblendlicht mittig in der Gruppe (18 bzw. 19) verlaufen. Die auf der Mantelfläche (21) der Blendenwelle (3) verlaufenden Brennlinien (5, 6, 7, 8, 9, 10) sind durch Flächenabschnitte (22) der Mantelfläche (21) verbunden, welche in Richtung der Drehachse und in Umfangsrichtung gegenüber einer Zylinderfläche abweichend und unregelmäßig verlaufen.

Die Blendenwelle (3) ist mit einer nicht dargestellten Steuerungseinrichtung gekoppelt, durch welche diese zwischen den Gruppen (18, 19) schalterbar ist. Als Schalter kann ein im Motorraum des Fahrzeugs befindlicher Schalter dienen. Weiterhin dient die Steuerungseinrichtung zum Schalten der Blendenwelle (3) in die Drehstellungen innerhalb der Gruppen (18, 19).

### Bezugszeichenliste

### Scheinwerfer für Fahrzeuge

- 1: Reflektor
- 2: Linse
- 3: Blendenwelle
- 4: Drehachse
- 5: erste Brennlinie
- 6: zweite Brennlinie
- 7: dritte Brennlinie
- 8: vierte Brennlinie
- 9: fünfte Brennlinie
- 10: sechste Brennlinie
- 11: Hell-Dunkel-Grenze
- 12: erste Lichtfigur
- 13: zweite Lichtfigur
- 14: dritte Lichtfigur
- 15: vierte Lichtfigur
- 16: fünfte Lichtfigur
- 17: sechste Lichtfigur
- 18: erste Gruppe
- 19: zweite Gruppe
- 20: Ebene
- 21: Mantelfläche
- 22: Flächenabschnitt
- 23: Elektromotor
- 24: Gehäuse
- 25: Abschlußscheibe
- 26: Lichtquelle
- 27: Öffnung
- 28: Gestell
- 29: Lagerstellen
- 30: Getriebe

## Patentansprüche

1. Scheinwerfer für Fahrzeuge mit einem zwei Brennorte aufweisenden schalenförmigen Reflektor (1) und mit einer zwischen einer Linse (2) und dem Reflektor (1) angeordneten Blendenwelle (3), welche um eine horizontale und quer zur optischen Achse verlaufenden Drehachse (4) in mehrere Drehstellungen verstellbar ist und deren Mantelfläche (21) für jede Drehstellung eine Brennlinie (5, 6, 7, 8, 9, 10) aufweist, welche eine Hell-Dunkel-Grenze (11) einer Lichtfigur (12, 13, 14, 15, 16, 17) erzeugt, **dadurch gekennzeichnet, daß** die Blendenwelle (3) eine erste Gruppe (18) von drei benachbart zueinander verlaufenden Brennlinien (5, 6, 7) und eine zweite Gruppe Brennlinien (8, 9,10) aufweist, wobei die Brennlinien (4, 5, 6) der ersten Gruppe (18) Lichtfiguren (12, 13 , 14) für Rechtsverkehr und die Brennlinien (8, 9, 10) der zweiten Gruppe (19) Lichtfiguren (15, 16, 17) für Linksverkehr erzeugen und die die jeweilige Gruppe (18, 19) von Brennlinien (5, 6, 7 bzw. 8, 9, 10) einfassenden Brennlinien (5, 7 und 8, 10) die größte und kleinste Lichtfigur (12, 14 und 15, 17) der jeweiligen Gruppe (18 bzw. 19) erzeugen.

2. Scheinwerfer nach Anspruch 1, **dadurch gekennzeichnet, daß** beide Gruppen (18, 19) ausschließlich Brennlinien (5, 6, 7, 8, 9, 10) aufweisen, die asymmetrische Lichtfiguren (12, 13, 14, 15, 16, 17) erzeugen.

3. Scheinwerfer nach Anspruch 1 oder 2, **dadurch gekennzeichnet, daß** die Brennlinien (5, 6, 7) der ersten Gruppe (18) jeweils mit einer Brennlinie (8, 9, 10) der zweiten Gruppe (19) in einer Ebene (20) verlaufen, in der die Drehachse (4) der Blendenwelle (3) liegt.

4. Scheinwerfer nach Anspruch 3, **dadurch gekennzeichnet, daß** sämtliche Ebenen (20) in einem gleich großen spitzen Winkel (a) zueinander verlaufen.

5. Scheinwerfer nach einem der Ansprüche 1 bis 4, **dadurch gekennzeichnet, daß** zwischen den äußeren Brennlinien (5, 7 und 8, 10) jeder Gruppe (18, 19) eine mittlere Brennlinie (6, 9) angeordnet ist, die zusammen auf einer Ebene (20) liegen und spiegelbildlich zueinander verlaufen.

6. Scheinwerfer nach einem der Ansprüche 1 bis 5, **dadurch gekennzeichnet, daß** die sich benachbarten äußeren Brennlinien (5, 10 und 4, 8) für dieselbe Lichtfunktion dienen, wobei von den sich benachbarten Brennlinie (5, 10 und 4, 8) eine Brennlinie für Rechtsverkehr und die andere Brennlinie für Linksverkehr ausgelegt ist.

7. Scheinwerfer nach einem der Ansprüche 1 bis 6, **dadurch gekennzeichnet, daß** die Mantelfläche (21) der Blendenwelle (3) mindestens in einem zwei Brennlinien verbindenden Flächenabschnitt (22) sowohl in Richtung der Drehachse (4) als auch in Umfangsrichtung gegenüber einer Zylinderfläche abweichend und unregelmäßig verläuft.

8. Scheinwerfer nach einem der Ansprüche 1 bis 7, **dadurch gekennzeichnet, daß** eine Steuerungseinrichtung vorgesehen ist, durch die die Blendenwelle (3) zwischen der ersten und zweiten Gruppe (18, 19) schaltbar ist.

9. Scheinwerfer nach einem der Ansprüche 1 bis 8, **dadurch gekennzeichnet, daß** die Blendenwelle (3) mit einem Elektromotor (23) gekoppelt ist, wobei eine mit dem Elektromotor (23) gekoppelte Lagerückmeldeeinrichtung als Referenz für die Einstellposition der Blendenwelle (3) durch den Elektromotor (23) dient.

10. Scheinwerfer nach Anspruch 9, **dadurch gekennzeichnet, daß** als Lagerückmeldeeinrichtung ein Potentiometer, ein Sensor oder ein Anschlag dient.

## Claims

1. Vehicle headlamp with a bowl-shaped reflector (1) having two foci and with a filter shaft (3) which is arranged between a lens (2) and the reflector (1) and is positionable in a plurality of rotational positions about a horizontal rotational axis (4) extending transversely across the optical axis and whose circumferential surface (21) has for each rotational position a focal line (5, 6, 7, 8, 9, 10) producing a light-dark boundary (11) of a light-figure (12, 13, 14, 15, 16, 17), **characterized in that** the filter shaft (3) has a first group (18) of three focal lines (5, 6, 7) adjacent to each other and a second group of focal lines (8, 9, 10), such that the focal lines (4[sic], 5, 6) of the first group (18) produce light-figures (12, 13, 14) for driving on the right and the focal lines (8, 9, 10) of the second group (19) produce light-figures (15, 16, 17) for driving on the left, and the focal lines (5, 7 and 8, 10) bordering each group (18, 19) of focal lines (5, 6, 7 and 8, 9, 10, respectively) produce the largest and smallest light-figures (12, 14 and 15, 17) of the respective group (18 or 19).

2. Headlamp according to Claim 1, **characterized in that** both groups (18, 19) have only focal lines (5, 6, 7, 8, 9, 10) producing asymmetrical light-figures (12, 13, 14, 15, 16, 17).

3. Headlamp according to Claim 1 or Claim 2, **characterized in that** each focal line (5, 6, 7) of the first group (18) extends, with a focal line (8, 9, 10) of the second group (19), in a plane (20) in which the rotational axis (4) of the filter shaft (3) lies.

4. Headlamp according to Claim 3, **characterized in that** all planes (20) extend at an equal acute angle (a) to each other.

5. Headlamp according to any one of Claims 1 to 4, **characterized in that** a central focal line (6, 9) is arranged between the outer focal lines (5, 7 and 8, 10) of each group (18, 19) [and these central focal lines (6, 9)] lie in mirror-image positions in a common plane (20).

6. Headlamp according to any one of Claims 1 to 5, **characterized in that** the adjacent outer focal lines (5, 10 and 4, 8) are used for the same light function, with one of the adjacent focal lines (5, 10 and 4, 8) designed for driving on the right, and the other, for driving on the left.

7. Headlamp according to any one of Claims 1 to 6, **characterized in that** the circumferential surface (21) of the filter shaft (3) extends, at least in a surface portion (22) connecting two focal lines, aberrantly and irregularly with respect to a cylindrical surface, both in the direction of the rotational axis (4) and in the circumferential direction.

8. Headlamp according to any one of Claims 1 to 7, **characterized in that** a control device is provided for switching the filter shaft (3) between the first and second groups (18,19).

9. Headlamp according to any one of Claims 1 to 8, **characterized in that** the filter shaft (3) is coupled to an electric motor (23), with a position feedback device coupled to the electric motor (23) serving as reference for the positioning of the filter shaft (3) by the electric motor (23).

10. Headlamp according to Claim 9, **characterized in that** a potentiometer, sensor or stop serves as the position feedback device.

## Revendications

1. Phare pour véhicules comportant un réflecteur (1) en forme de coque présentant deux foyers et un comportant un arbre de diaphragme (3) agencé entre une lentille (2) et le réflecteur (1), lequel est réglable dans plusieurs positions de rotation autour d'un axe de rotation (4) s'étendant à l'horizontale et perpendiculairement à l'axe optique et dont la surface enveloppe présente pour chaque position de rotation une ligne focale (5, 6, 7, 8, 9, 10) qui produit une limite de clair-obscur (11) d'une figure lumineuse (12, 13, 14, 15, 16, 17), **caractérisé en ce que** l'arbre de diaphragme (3) présente un premier groupe de trois lignes focales (5, 6, 7) s'étendant au voisinage les unes des autres et un deuxième groupe de lignes focales (8, 9, 10), les lignes focales (4, 5, 6) du premier groupe (18) produisant des figures lumineuses (12, 13, 14) pour la circulation à droite et les lignes focales (8, 9, 10) du deuxième groupe (19) produisant des figures lumineuses (15, 16, 17) pour la circulation à gauche, et les lignes focales (4, 7 et 8, 10) qui entourent le groupe respectif (18, 19) de lignes focales (5, 6, 7 et 8, 9, 10) produisant la plus grande figure lumineuse (12, 14) et la plus petite figure lumineuse (15, 17) du groupe respectif (18, 19).

2. Phare selon la revendication 1, **caractérisé en ce que** les deux groupes (18, 19) présentent exclusivement des lignes focales (5, 6, 7, 8, 9, 10) qui produisent des figures lumineuses asymétriques (12, 13, 14, 15, 16, 17).

3. Phare selon l'une ou l'autre des revendications 1 et 2, **caractérisé en ce que** les lignes focales (5, 6, 7) du premier groupe (18) s'étendent chacune avec une ligne focale (8, 9, 10) du deuxième groupe (19) dans un plan (20) dans lequel est situé l'axe de rotation (4) de l'arbre de diaphragme (3).

4. Phare selon la revendication 3, **caractérisé en ce que** tous les plans (20) s'étendent les uns par rapport aux autres sous un angle aigu (a) de même grandeur.

5. Phare selon l'une des revendications 1 à 4, **caractérisé en ce qu'**entre les lignes focales (5, 7 et 8, 10) extérieures de chaque groupe (18, 19) est agencée une ligne focale (6, 9) médiane, lignes focales médianes qui sont situées conjointement sur un plan (20) et qui s'étendent symétriquement l'une à l'autre.

6. Phare selon l'une des revendications 1 à 5, **caractérisé en ce que** les lignes focales (5, 10 et 4, 8) extérieures mutuellement voisines servent à la même fonction lumineuse, l'une des lignes focales voisines (5, 10 et 4, 8) étant conçue pour la circulation à droite et l'autre ligne focale étant conçue pour la circulation à gauche.

7. Phare selon l'une des revendications 1 à 6, **caractérisé en ce que** la surface enveloppe (21) de l'arbre de diaphragme (3) s'étend au moins dans un tronçon de surface (22) reliant deux lignes focales tant en direction de l'axe de rotation (4) qu'en direction périphérique, en divergeant d'une surface cylindrique et de manière irrégulière.

8. Phare selon l'une des revendications 1 à 7, **caractérisé en ce qu'**il est prévu un système de commande qui permet de commuter l'arbre de diaphragme (3) entre le premier groupe (18) et le deuxième groupe (19).

9. Phare selon l'une des revendications 1 à 8, **caractérisé en ce que** l'arbre de diaphragme (3) est accouplé à un moteur électrique (23), un système répétiteur de position accouplé au moteur électrique (23) servant de référence pour la position de réglage de l'arbre de diaphragme (3) par le moteur électrique (23).

10. Phare selon la revendication 9, **caractérisé en ce qu'**on utilise comme système répétiteur de position un potentiomètre, un capteur ou une butée.
